# EUROPEAN PATENT APPLICATION

(11) **EP 1 209 588 A2**
(43) Date of publication of application: **29.05.2002**
(21) Application number: 01127877.7
(22) Date of filing: 22.11.2001
(51) Int. Cl.: G06F 17/30

(54) **Information distribution system and method**

(30) Priority: 27.11.2000 JP 2000359044
(71) Applicant: MATSUSHITA ELECTRIC INDUSTRIAL CO., LTD., Kadoma-shi, Osaka 571-8501 (JP)
(72) Inventor: Kindo, Toshiki, Yokohama-shi, Kanagawa 227-0044 (JP); Yoshida, Hideyuki, Sagamihara-shi, Kanagawa 228-0801 (JP); Shida, Takehiko, Yokohama-shi, Kanagawa 244-0813 (JP)
(74) Representative: Grünecker, Kinkeldey, Stockmair & Schwanhäusser Anwaltssozietät

(57) **Abstract**

In an information distribution system (100) that rates distribution information pieces from a distribution information provider (101) based on a personal profile to distribute to a client (103) where the personal profile has registered therewith various keywords contained in the distribution information pieces provided from the distribution information provider (101) and evaluation values corresponding to the keywords and the evaluation values are learned in advance based on preferences of the client (103), distribution information pieces from another distribution information provider (104) different from the distribution information provider (101) are rated based on the personal profile to distribute to the client (103).

## Description

### BACKGROUND OF THE INVENTION

### Field of the Invention

The present inventor relates to an information distribution system and method utilizing information communication networks using electronic, radio and/or optical system as media.

### Description of the Related Art

In recent years, with the progression of communication technologies, the number of clients has been increased who access to the internet using personal computers (hereinafter referred to as "PC") or the like. Generally, such clients access to favorite homepages on the internet using the browsing function installed in PC, and request the distribution of information corresponding to preferences of each client on the homepage. In other words, a provider is capable of distributing the information corresponding to preferences of a client only after receiving the access of the client, and further receiving the request for the distribution of information.

However, there exist needs of providers of homepages for distributing the information matching preferences of a client having specific preferences without awaiting the request for the distribution of the information from the client. In particular, such needs become remarkable due to their cost and sales strategic advantages in distributing advertising to clients having specific preferences.

### SUMMARY OF THE INVENTION

It is an object of the present invention to provide an information distribution system and method capable of efficiently distributing information corresponding to preferences of a specific client.

Namely, in an information distribution system having a storage section that stores a personal profile with which various keywords contained in distribution information provided from a distribution information provider and evaluation values corresponding to the keywords are registered where the evaluation values are learned in advance based on preferences of a client, and an information filtering unit which rates the distribution information from the distribution information provider based on the personal profile stored in the storage section to distribute to the client, the information filtering unit rates distribution information from a different distribution information provider based on the personal profile stored in the storage section to distribute to the client.

According to the foregoing, the different distribution information provider is capable of utilizing the personal profile of a specific client learned based on the distribution information from a distribution information provider and of efficiently distributing the information of the different distribution information, without having prior knowledge of the client.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram illustrating a configuration of an information distribution system according to a first embodiment of the present invention;
FIG.2 is a block diagram illustrating a specific configuration of an information distribution unit in the information distribution system according to the first embodiment;
FIG.3 is a block diagram illustrating a specific configuration to indicate the relationship between a main information filtering section and a PPF storage section in the information distribution unit in the information distribution system according to the first embodiment;
FIG.4 is a table showing an example of data in a code dictionary storage section in the main information filtering section in the information distribution system according to the first embodiment;
FIG.5 is a table showing examples of scores assigned to the example illustrated in FIG.4;
FIG.6 is a table showing an example of newspaper information ranked in a distribution information storage section in the main information filtering section in the information distribution system according to the first embodiment;
FIG.7 is a diagram illustrating an example of a learning and listing screen generated by a distribution information output control section in the main information filtering section in the information distribution system according to the first embodiment;
FIG.8 is a block diagram illustrating a specific configuration to indicate the relationship between a sub-information filtering section and the PPF storage section in the information distribution unit in the information distribution system according to the first embodiment;
FIG. 9 is a diagram illustrating an example of a screen displayed on a display or the like of a client in the information distribution system according to the first embodiment; and
FIG.10 is a block diagram illustrating a configuration of an information distribution system according to a second embodiment of the present invention; and
FIG.11 is a block diagram illustrating a configuration of an information distribution system according to a third embodiment of the present invention.

### DETAILED DESCRIPTION OF THE PREFERRED EMBODIMENTS

Embodiments applying an information distribution system of the present invention will be described specifically below with reference to accompanying drawings.

### (First embodiment)

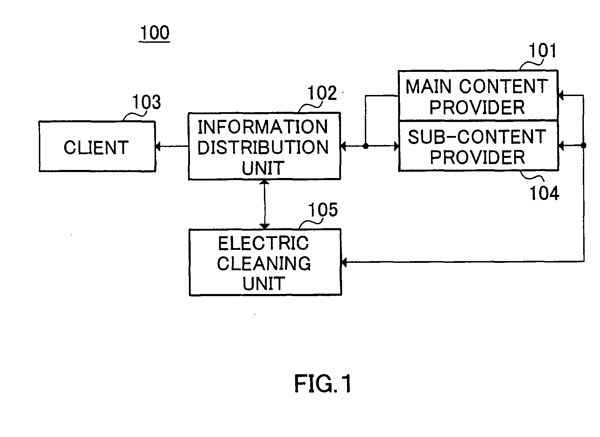

FIG.1 is a block diagram illustrating a configuration of information distribution system 100 according to the first embodiment of the present invention.

In information distribution system 100 illustrated in FIG.1, main content provider (hereinafter referred to as "main CP") 101 issues information described later to be distributed to a client.

Information distribution unit 102 rates the distribution information from main CP 101 based on a personal profile (hereinafter referred to as "PPF") which was registered previous corresponding to the distribution information from main CP 101 and which is reflective of preferences of a client, and distributes the rated distribution information to the client. In addition, PPF will be described specifically below.

Client 103 accesses to the information distribution system using a browsing function of a general personal computer (hereinafter referred to as "PC") which is provided with, for example, a computing processing means such as CPU and storage means such as RAM and ROM, and which is connected to an input means such as a keyboard and a display means such as a display.

Sub-content provider (hereinafter referred to as "sub-CP") 104 issues distribution information different from that of main CP 101. Electronic clearing unit 105 charges or pays the cost to main CP 101 and sub-CP 104. The above components are connected over networks such as the internet, thereby achieving information distribution system 100.

In addition, information distribution system 100 has a configuration where main CP 101, sub-CP 104 and client 103 are connected over networks to information distribution unit 102 and electronic clearing unit 105, for example, provided in an agent. In this case, it may be possible that an agent is provided with only information distribution unit 102, and that electronic clearing unit 105 is committed to an external financial institution. Further, it is considered that an internet service provider that operates main CP 101 operates information distribution unit 102.

Any information is usable in information distribution system 100 as the information distributed from main CP 101 and sub-CP104. Examples of such information are information (hereinafter referred to as "newspaper information" including newspaper accounts or the like and information (hereinafter referred to as "advertising information") including advertising for merchandise. In the case where the advertising information is distributed and client 103 places an order on networks, it may be possible that electronic clearing unit 105 clears the transaction on the merchandise between client 103 and a content provider.

Information distribution system 100 makes sub-CP 104 use PPF which is registered with information distribution unit 102 based on the distribution information from main CP 101 and which is reflective of preferences of a specific client 103, and thereby enables sub-CP 104 that does not have any prior knowledge of the specific client 103 to efficiently perform the information distribution. Accordingly, it is preferable that the distribution information from main CP 101 be broad in scope. It is assumed in this embodiment that the distribution information from main CP 101 is the newspaper information and that the distribution information from sub-CP 104 is the advertising information.

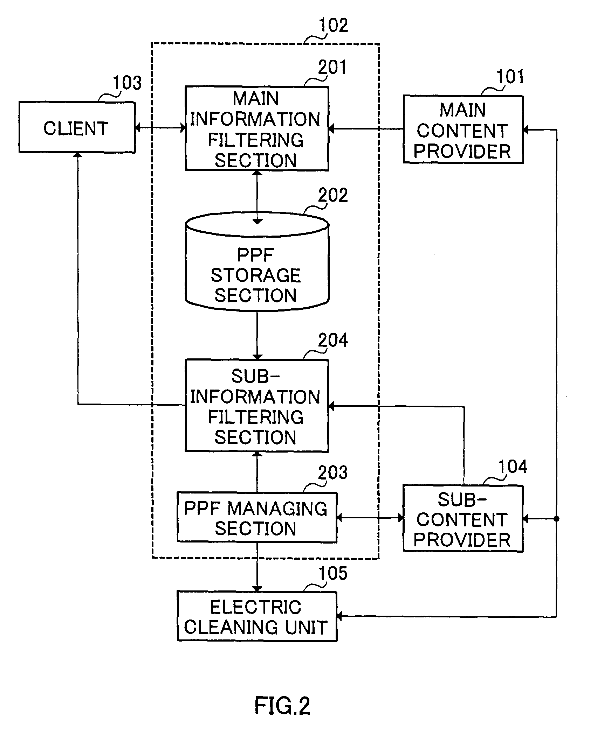

With reference to FIG.2, a specific configuration will be described below of information distribution unit 102 in information distribution system 100. FIG.2 is a block diagram illustrating the specific configuration of information distribution unit 102 in information distribution system 100.

In information distribution system 100 illustrated in FIG.2, main CP 101 issues the newspaper information to information distribution unit 102. The newspaper information pieces issued from main CP 101 are sorted for each account like an account in newspaper, and contains keywords (for example, business, sports, leisure, etc.) indicative of the contents of respective accounts.

Sub-CP 104 issues the advertising information to information distribution unit 102. The advertising information pieces are sorted for each advertising as the newspaper information pieces and contains keywords (for example, financial product, soccer ball, apparel, compact disk (CD), etc.) indicative of the contents of respective advertising.

Information distribution unit 102 is provided with main information filtering section 201, personal profile storage section (hereinafter referred to as "PPF storage section") 202, personal profile managing section (hereinafter referred to as "PPF managing section") 203 and sub-information filtering section 204.

Main information filtering section 201 generates PPF reflective of preferences of client 103 using the distribution information from main CP 101 and data input from client 103. PPF generated in main information filtering section 102 is stored in PPF storage section 202. In this embodiment, since main CP 101 distributes the newspaper information, main information filtering section 201 generates PPF reflective of preferences of client 103 on the newspaper information, and the generated PPF is stored in PPF storage section 202.

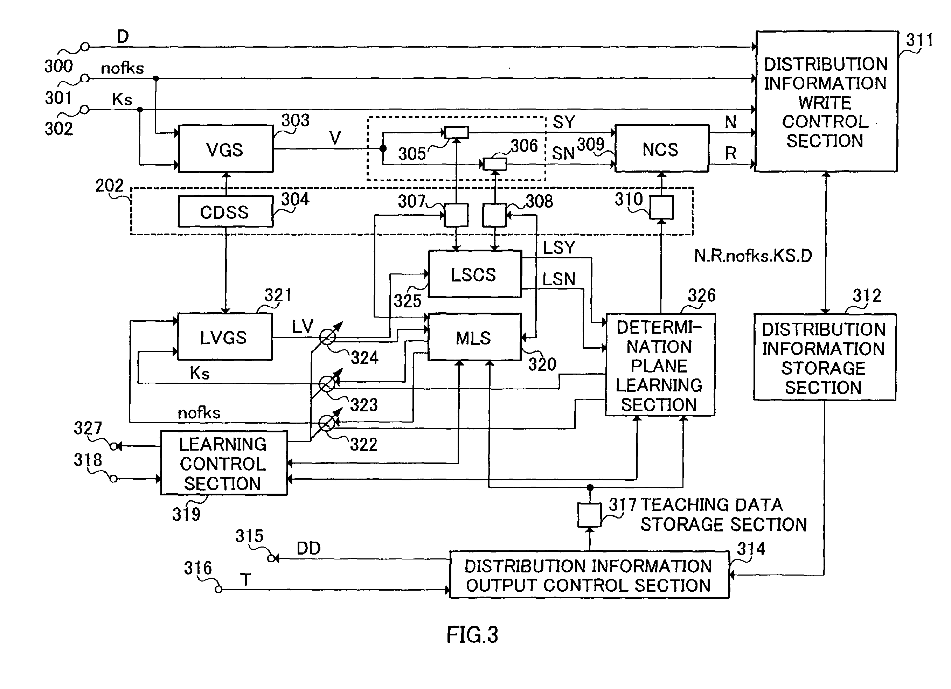

With reference now to FIG.3, the relationship between main information filtering section 201 and PPF storage section 202 will be described. FIG.3 is a block diagram illustrating a configuration with respect the relationship between main information filtering section 201 and PPF storage section 202.

Main information filtering section 201 is associated with PPF storage section 202 in two kinds of processing, i.e., filtering processing on the newspaper information from main CP 101 and learning processing on the newspaper information. The filtering processing is such processing that rates pieces of the newspaper information from main CP 101 according to PPF reflective of preferences of client 103. It is preferable that the newspaper information pieces are ranked according to the rates. In this embodiment a case will be described in particular that the newspaper information pieces from main CP 101 are ranked based on PPF reflective of preferences of client 103. The learning processing is such processing that learns PPF for use in performing the filtering processing.

In addition, a preferable example of main information filtering section 201 is an information filtering apparatus disclosed in Japanese Laid-open Patent Publication HEI9-288683. In order to simplify the explanation, the simplest configuration is herein used to explain.

The filtering processing on the newspaper information in main information filtering section 201 will be described first.

When client 103 accesses to main CP 101 to obtain the newspaper information and information distribution unit 102 receives the newspaper information from main CP 101, as illustrated in FIG.3, input to information data input terminal 300 is the newspaper information targeted for the rating, input to number-of-keyword signal input terminal 301 is a number-of-keyword signal nofks indicative of the number of keywords contained in the newspaper information, and input to keyword signal input terminal 302 is keyword group signal Ks comprised of a plurality of keywords. The keyword group signal Ks is comprised of keywords contained in the newspaper information.

Vector generating section (VGS) 303 transforms the keyword group signal Ks from character sequences to a vector signal V. In order to transform the character sequences to the vector signal V, a character sequence is employed of a code dictionary signal stored in code dictionary storage section (CDSS) 304.

Code dictionary storage section 304 stores character sequences of keywords of various accounts in the form of code dictionary signals. When the same character sequence as a character sequence of a jth code dictionary signal is detected from the keyword group signal Ks, "1" is input to a jth vector component of the vector signal V. When the same character sequence as the character sequence of the jth code dictionary signal is not detected, "0" is input to the jth vector component of the vector signal V. Similar processing is repeated with respect to all the components of the vector signal V.

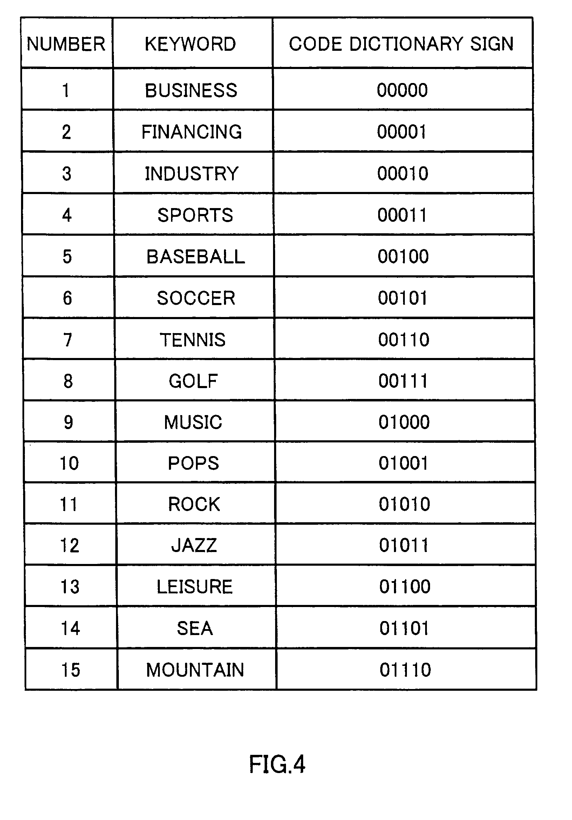

The keywords contained in the newspaper information will be specifically described. In code dictionary storage section 304 are stored character sequences such as "business", "industry", "sports", "baseball", "soccer", "music", "jazz", "leisure", "sea", etc. FIG.4 is a table showing an example of data in code dictionary storage section 304 that stores the relationship between the character sequences of these keywords and the code dictionary signals.

Positive signal calculating section 305 calculates, using a positive metric signal, a positive signal SY such that a value thereof is large when the keyword group signal Ks contains a large number of keywords such that the consumer previously replied the keyword interested the consumer. Negative signal calculating section 306 calculates, using a negative metric signal, a negative signal SN such that a value thereof is large when the keyword group signal Ks contains a large number of keywords such that the consumer previously replied that the keyword did not interest the consumer.

The positive metric signal stored in positive metric storage section 307 is determined based on the keyword group signal Ks and a result of the reply indicative of that the consumer has an interest. The negative metric signal stored in negative metric storage section 308 is determined based on the keyword group signal Ks and a result of the replay indicative of that the consumer has no interest.

The positive metric signal and negative metric signal each are assigned a value (hereinafter referred to as "score") corresponding to the presence or absence of interest of client 103 in relation to each keyword. Assuming, in the above-mentioned specific example, that client 103 previously replied having an interest in the newspaper information containing "baseball" that is the keyword, the score corresponding to the number of times having an interest was replied is assigned to "baseball" . Further assuming a simple example such that having an interest was replied four times, the score of 4 is assigned to "baseball". In contrast thereto, when the consumer previously replied having no interest, the score corresponding to the number of times having no interest was replied is assigned to "baseball".

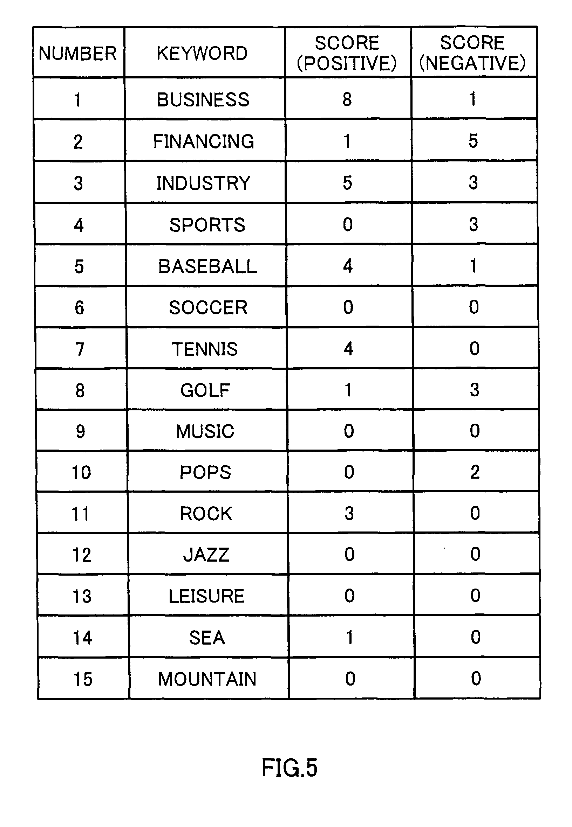

FIG.5 is a table showing examples of scores assigned to the specific example in FIG.4. The positive signal SY and negative signal SN are obtained by calculating scores assigned corresponding to respective keywords.

Using the positive signal SY and negative signal SN, necessity calculating section (NCS) 309 calculates a necessity signal N according to an equation of N=SY-C SN and further calculates a reliability signal R according to another equation of R=C · SY+SN. The coefficient C is used to separate the newspaper information into pieces of the information that interested the client and pieces of the information that did not interest the client, and is provided from determination parameter storage section 310. The necessity signal N and reliability signal R have a large value when there are a large number of keywords contained in the newspaper information such that the client previously replied having an interest therein, and there are few keywords contained in the newspaper information such that the client previously replied having no interest therein. Necessity calculating section 309 thus calculates the necessity signal N and reliability signal R, whereby each newspaper information piece distributed from main CP 101 is rated based on PPF.

PPF storage section 202 is comprised of code dictionary storage section 304, positive metric storage section 307, negative metric storage section 308, and determination parameter storage section 310 described above. In addition, various data to be stored in code dictionary storage section 304, positive metric storage section 307, negative metric storage section 308, and determination parameter storage section 310 is stored in the learning processing described later. It is herein assumed that appropriate data subjected to the learning processing is already stored in the above sections.

Distribution information write control section 311 ranks the newspaper information pieces corresponding to the rate (necessity signal N) of each piece to write in distribution information storage section 312. In distribution information storage section 312 are arranged and stored the newspaper information pieces in descending order of a value of the necessity signal N.

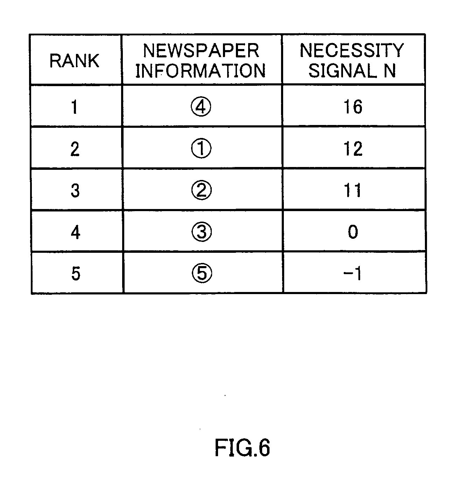

FIG.6 is a table showing examples of the newspaper information pieces ranked in distribution information storage section 312 after learning preferences of some client 103. FIG.6 illustrates a case of using the newspaper information pieces containing keywords described below shown in FIGs.4 and 5, where the coefficient C is "1":
Newspaper information ①: business, industry, baseball and soccer;
Newspaper information ②: business, rock and sea;
Newspaper information ③: financing, rock and sea;
Newspaper information ④:business, industry, baseball and tennis;
Newspaper information ⑤: financing, rock and mountain.

In this case, in distribution information storage section 312 are stored the newspaper information pieces in the order as shown in FIG.6. In other words, according to the equation of the necessity signal described previously, necessity signals N are calculated as follows:
Newspaper information ④ : {8+5+4+4}(SY)-{1}(C) · {1+3+1+0}(SN)=16(N);
Newspaper information ① : {8+5+4+0}(SY)-{1}(C) · {1+3+1+0}(SN)=12(N);
Newspaper information ② : {8+3+1}(SY)-{1}(C) · {1+0+0}(SN)=11(N) ;
Newspaper information ③ : {1+3+1}(SY)-{1}(C) · {5+0+0}(SN)=0(N); and
Newspaper information ⑤ : {1+3+0}(SY)-{1}(C) · {5+0+0}(SN)=-1(N).

Therefore, newspaper information pieces ① to ⑤ are ranked and stored as shown in FIG.6.

Distribution information output control section 314 uses the newspaper information pieces ranked and stored in distribution information storage section 312 to generate a predetermined learning and listing screen, and transfers the screen to client 103 through distribution information output terminal 315. In this embodiment, on the learning and listing screen are displayed newspaper information pieces rearranged according to the order as illustrated in FIG.6. In addition, the learning and listing screen will be described later along with the learning processing.

Thus, when receiving the newspaper information pieces distributed from main CP 101, client 103 is capable of watching the newspaper information pieces ranked according to previous inputs of the client indicative of interests or no interests thereof, using the display or the like of PC that the client uses without performing particular processing.

The learning processing in main information filtering section 201 will be described below.

When main information filtering section 201 receives a learning request from client 103, the section 201 accesses to main CP 101 to request for the distribution of the newspaper information according to search criteria and the like contained in the learning request. Main information filtering section 201 receives the newspaper information distributed from main CP 101 in response to the distribution request.

The learning processing is such processing that learns PPF indicative of preferences of client 103 by analyzing keywords contained in the newspaper information, where client 103 inputs whether or not he/she has an interest in the newspaper information distributed from main CP 101. By performing the learning processing, PPF is stored in positive metric storage section 307 and negative metric storage section 308.

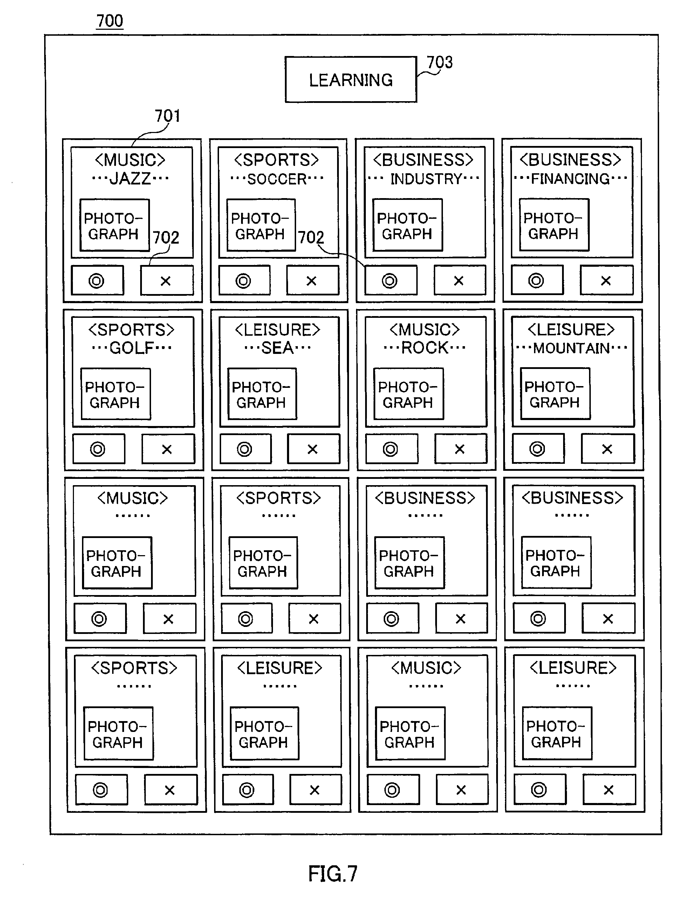

When the learning processing has been already performed, main information filtering section 201 rates the distributed newspaper information pieces in the same way as in the filtering processing described above according to the stored PPF. As a preferable way to display the information pieces , the section 201 ranks the information pieces according to the rates, and generates learning and listing screen 700 as illustrated in FIG.7. PPF is further updated according to a learning instruction of client 103 through learning and listing screen 700.

However, in the step where the learning processing is not performed, PPF is not stored in positive metric storage section 307 and negative metric storage section 308, and it is not possible to perform the above processing. Therefore, newspaper information pieces are written in distribution information storage section 312 without being ranked. Distribution information output control section 314 generates learning and listing screen 700 illustrated in FIG.7 using a plurality of newspaper information pieces written in distribution information storage section 312. This learning and listing screen 700 is transferred to client 103 through newspaper information output terminal 315.

As illustrated in FIG.7, learning and listing screen 700 is comprised of a plurality of newspaper information pieces 701, buttons 702 (shown with "ⓞ" and "×") for use in inputting "yes" or "no" as to whether client 103 is interested in each newspaper information piece, and learning button 703. In addition, while in this embodiment is described the case where learning and listing screen 700 is comprised of buttons 702 (shown with "ⓞ" and "×") for use in inputting "yes" or "no" as to whether client 103 is interested in each newspaper information piece, learning and listing screen 700 does not always require buttons 702 (shown with "ⓞ" and "×").

When learning and listing screen 700 is displayed on the display or the like of PC that client 103 handles, client 103 examines the contents of newspaper information pieces 701 and inputs "yes" or "no", i.e., the presence or absence of interest. Then, client 103 transmits the learning instruction to main information filtering section 201 by selecting learning button 703 after finishing inputs on the interests.

The learning instruction contains a teaching signal T to each newspaper information piece. The teaching signal T is a signal indicative of an interest or hate (no interest) of client 103 in each newspaper information piece. When main information filtering section 201 receives the learning instruction through learning data input terminal 316, the section 201 fetches the teaching signal T transmitted along with the learning instruction. The teaching signal T is stored in teaching data storage section 317 through distribution information output control section 314. Each teaching signal T is stored in teaching data storage section 317 along with the keyword group signal Ks and number-of-keyword signal nofKs assigned to each newspaper information piece.

After the teaching signal T and the others are stored in teaching data storage section 317, a learning start signal is input to learning start signal input terminal 318. When the learning start signal is input, learning control section 319 makes switches 322, 323 and 324 made to connect metric learning section (MLS) 320 and learning vector generating section (LVGS) 321.

Metric learning section 320 fetches the teaching signal T, keyword group signal Ks and number-of-keyword signal nofKs from teaching data storage section 317, and inputs the keyword group signal Ks and number-of-keyword signal nofKs to learning vector generating section 321.

Learning vector generating section 321 transforms the keyword group signal Ks to a learning vector signal LV using the code dictionary signal in the same way as described previously. The learning vector signal LV is input to metric learning section 320.

Metric learning section 320 corrects the positive metric signal in positive metric storage section 307 based on the learning vector signal LV corresponding to the teaching signal T indicative of having an interest, while correcting the negative metric signal in negative metric storage section 308 based on the learning vector signal LV corresponding to the teaching signal T indicative of having no interest.

The positive metric signal thereby has a large value with respect to the keywords included in the newspaper information piece that interests client 103. Similarly, the negative metric signal thereby has a large value with respect to the keywords included in the newspaper information piece that does not interest client 103.

Learning score calculating section (LSCS) 325 operates in a similar way to that in positive signal calculating section 305 and negative signal calculating section 306 to calculate a learning positive signal LSY and a learning negative signal LSN from the learning vector signal LV. Using the learning positive signal LSY and learning negative signal LSN, determination plane learning section 326 obtains the coefficient C that most accurately separates newspaper information pieces that interest client 103 and that do not interest client 103. The coefficient C is expressed on a two-dimensional space using the positive signal SY and negative signal SN. The obtained coefficient C is stored in determination parameter storage section 310. Storing the coefficient C in determination parameter storage section 310 finishes the learning processing. When the learning processing is finished, learning control section 319 outputs a learning finish signal from learning finish signal output terminal 327.

After confirming that the learning finish signal is output, distribution information write control section 311 inputs again each newspaper information piece, and the keyword group signal Ks and number-of-keyword signal nofks each assigned to the newspaper information piece stored in distribution information storage section 312 to respective input terminals 300, 301 and 302. As a result, with respect to each newspaper information piece, the necessity signal N which is accurately reflective of interests (preference and taste) of client 103 is calculated based on the keywords assigned to the newspaper information piece. The newspaper information pieces are rearranged in descending order of the necessity signal N to be stored again in distribution information storage section 312. Distribution information output control section 314 generates learning and listing 700 with the newspaper information pieces rearranged in descending order of the necessity signal N, and transfers the generated screen to PC or the like that client 103 handles, so that the screen 700 is displayed on the display or the like connected to PC.

Client 103 inputs its preference again if necessary, while watching the ranked newspaper information pieces, and searches for the newspaper information matching with the client's preferences. By performing this processing when the newspaper information is distributed, in other words, only by thus inputting "yes" or "no" on whether or not each newspaper information piece interests client 103, client 103 is capable of obtaining PPF matching with the client's preferences.

In the information distribution system it is extremely preferable that each keyword includes information to identify an information provider (in electronic commerce, information to identify a store or information to identify an advertiser is included). This is because performing thus the filtering processing on the newspaper information using PPF reflective of preferences of client 103 enables the rate of the information distributed from a malicious provider to be automatically decreased. For example, a case is considered that in order to increase a search hit rate of its own information, a malicious provider inputs information that is not directly associated with the information. In this case, when client 103 inputs "hate (no interest)" in such information, the information containing a keyword indicative of such a provider is assigned a negative score in PPF. It is thereby possible to automatically decrease the rate of the information distributed from such a provider. In other words, it is possible to provide an information distribution system such that client 103 is capable of supervising distributed information, and to automatically increase the rates on providers that distribute good information.

Returning now to FIG.2, the description will be continued on the configuration of information distribution unit 102. PPF managing section 203 manages whether or not to permit a request from sub-CP 104 on the utilization of PPF of specific client 103 registered with PPF storage section 202.

When permitting the utilization of PPF, PPF managing section 203 notifies the permission to sub-CP 104 and sub-information filtering section 204. When receiving the notification, sub-CP 104 starts distributing the information to sub-information filtering section 204, In this embodiment sub-CP 104 starts distributing the advertising information.

Meanwhile, sub-information filtering section 204 fetches PPF of specific client 103 from PPF storage section 202, and using this PPF, performs the filtering processing on the advertising information from sub-CP 104.

As describe above, sub-information filtering section 204 only uses PPF registered based on the newspaper information from main CP 101. Therefore sub-information filtering section 204 does not perform the learning processing unlike main information filtering section 201. Accordingly, since information distribution unit 102 learns PPF only based on the newspaper information, thereby maintaining constant accuracy of preferences of client 103 registered with PPF generated based on the newspaper information from main CP 101.

When PPF managing section 203 permits the utilization of PPF, the section 203 notifies the permission to electronic clearing unit 105. When electronic clearing unit 105 receives the notification, the section charges a utilization charge and commission to sub-CP 104, while paying the utilization charge to main CP 101.

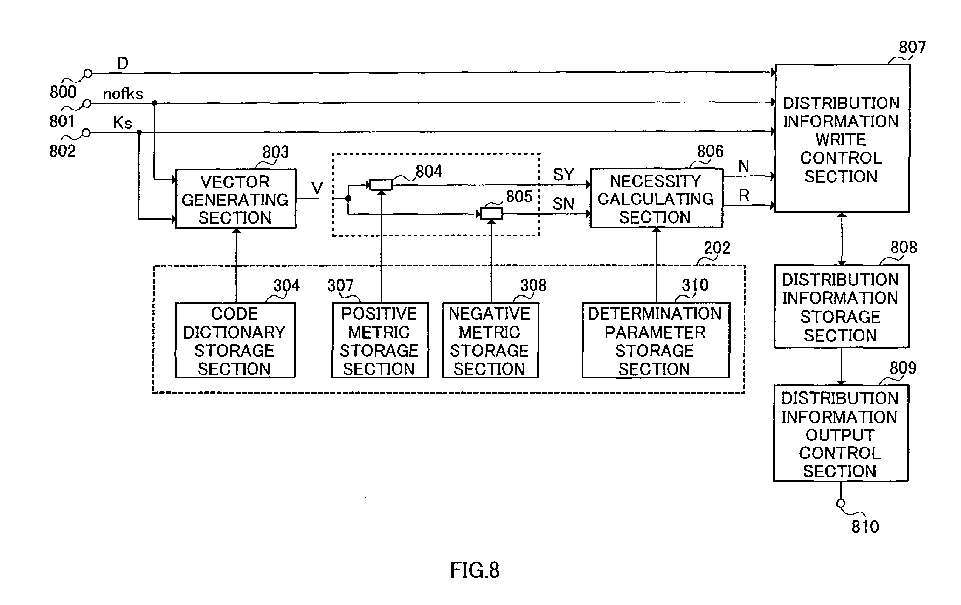

With reference now to FIG.8, the relationship between sub-information filtering section 204 and PPF storage section 202 will be described below. FIG.8 is a block diagram illustrating a specific configuration with respect to the relationship between sub-information filtering section 204 and PPF storage section 202.

Sub-information filtering section 204 is associated with PPF storage section 202 in only the filtering processing on the advertising information. This filtering processing is the same as the filtering processing in main information filtering section 201.

When sub-information filtering section 204 receives the notification of permitting the utilization of PPF from PPF managing section 203 and the advertising information is distributed to information distribution unit 102 from sub-CP 104, as illustrated in FIG.8, input to information data input terminal 800 is the advertising information targeted for the rating, input to number-of-keyword signal input terminal 801 is a number-of-keyword signal nofks indicative of the number of keywords contained in the advertising information, and input to keyword signal input terminal 802 is keyword group signal Ks comprised of a plurality of keywords. The keyword group signal Ks is comprised of keywords contained in the advertising information.

Vector generating section 803 transforms the keyword group signal Ks from character sequences to a vector signal V in the same way as in information filtering section 201. In order to transform the character sequences to the vector signal V, a character sequence is employed of a code dictionary signal stored in code dictionary storage section 304.

Positive signal calculating section 804 calculates, using a positive metric signal, a positive signal SY such that a value thereof is large when the keyword group signal Ks contains a large number of keywords such that the consumer previously replied the keyword interested the consumer. Negative signal calculating section 805 calculates, using a negative metric signal, a negative signal SN such that a value thereof is large when the keyword group signal Ks contains a large number of keywords such that the consumer previously replied that the keyword hated by the consumer.

The positive metric signal stored in positive metric storage section 307 and the negative metric signal stored in negative metric storage section 308 are determined in the same way as described on main information filtering section 201.

Using the positive signal SY and negative signal SN, necessity calculating section 806 calculates a necessity signal N according to an equation of N=SY-C · SN and further calculates a reliability signal R according to another equation of R=C · SY+SN. The coefficient C is used to separate the newspaper information into pieces of the information that interested the client and pieces of the information hated by the client, and is provided from determination parameter storage section 310. The necessity signal N and reliability signal R have a large value when there are a large number of keywords contained in the newspaper information such that the client previously replied having an interest therein, and there are few keywords contained in the newspaper information such that the client previously replied hating therein. Necessity calculating section 806 thus calculates the necessity signal N and reliability signal R, whereby each advertising information piece is rated based on PPF.

in a preferable embodiment, distribution information write control section 807 ranks the advertising information pieces corresponding to the rate (necessity signal N) of each piece to write in distribution information storage section 808. In distribution information storage section 808 are arranged and stored the advertising information pieces in descending order of a value of the necessity signal N. Distribution information output control section 809 transfers the advertising information pieces ranked and stored in distribution information storage section 808 to client 103 through distribution information output terminal 810. The advertising information pieces form sub-CP 104 are thus ranked according to previous inputs of client 103 indicative of interests or hates thereof on the newspaper information, and displayed on the display or the like of PC, without being given any particular processing.

Thus, according to information distribution system 100 of the first embodiment, sub-CP 104 is capable of efficiently distributing the advertising information by utilizing PPF reflective of preferences of specific client 103 registered based on the newspaper information, without having prior knowledge of the client 103.

In addition, in this embodiment is described the case that different kinds of information, i.e., the newspaper information and advertising information, are distributed separately from different content providers. However, the present invention is not limited to the above case, and is applicable to a case that the same provider distributes the newspaper information and advertising information.

Further in this embodiment, main information filtering section 201 and sub-information filtering section 204 are provided separately. However, the present invention is not limited to the foregoing, and it may be possible to a single information filtering section achieves the functions of the sections 201 and 204 by introducing a way of switching the PPF.

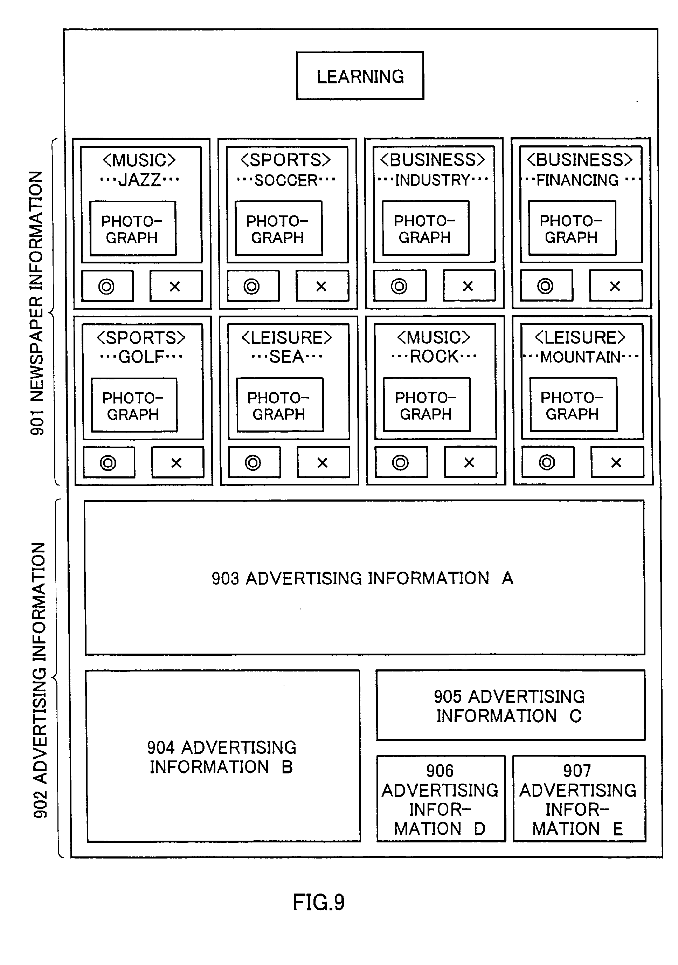

Furthermore, as an aspect for distributing the advertising information from sub-CP 104 to client 103, it is considered to display the advertising information pieces ranked in sub-information filtering section 204 on a full screen of the display or the like that client 103 handles according the ranking. However, the present invention is not limited to the above aspect, and it may be possible to display newspaper information 901 at an upper half of the screen of the display or the like, while displaying the advertising information 902 at a lower half of the screen of the display or the like, as illustrated in FIG.9. In addition, a combination of the newspaper information and advertising information is not limited to the example in FIG.9, and any combination is usable.

Still furthermore, as illustrated in FIG.9, it may be possible to provide display areas of the advertising information with different sizes, and to display the advertising information in a size corresponding to the ranking according to preferences of specific client 103. For example, it is preferable that advertising information A 903 in which specific client 103 has the most interest is displayed at the widest display area, advertising information B 904 in which specific client 103 has the second-most interest is displayed at the second-widest display area, and that similarly advertising information 905, 906 and 907 with the third-interest, fourth-interest and fifth-interest are displayed corresponding to the size of the display area. In this case the advertising information matching with preferences of client 103 is easy to attract client 103, and thereby increased advertising effectiveness is expected.

Moreover, it is preferable to provide different advertising costs corresponding to a size of the display area of the advertising information. For example, when an advertising agency operations sub-CP 104, a plurality of companies (people) is expected as sponsors. When display areas of the advertising information are provided with different sizes, the advertising effectiveness changes. Therefore, it is preferable to charge the sponsor of the advertising information displayed at a large display area for an advertising cost appropriate for the size of the area.

In order to achieve thus providing different advertising costs in information distribution system 100, it is considered to notify sub-CP 104 of the filtering result of the advertising information in sub-information filtering section 204 to enable sub-CP 104 to charge a cost according to the display area corresponding to the filtering result to a sponsor of each advertising. Specifically, sub-CP 104 is notified the filtering result indicative of that the largest display area is of sponsor A, the second-largest display area is of sponsor B, and that the third-largest display area is of sponsor C.

Further, it is preferable to notify sub-CP 104 of click information in PC or the like that client 103 handles. In this case, since it is possible to charge the advertising cost corresponding to the browsing result on the advertising information actually displayed on the display or the like, it is possible to charge the advertising cost more suited to the advertising effectiveness. In addition, it may be also possible for an agency that operates information distribution unit 102 to receive a brokerage commission from sub-CP 104.

In addition, while in the first embodiment is described the case where client 103 uses PC or the like to utilize information distribution system 100, the present invention is not limited to the above case. In other words, any terminal accessible to information distribution unit 102 such as a cellular telephone is usable.

### (Second embodiment)

Information distribution system 1000 according to the second embodiment efficiently distributes the information corresponding to preferences of a specific client utilizing PPF registered based on two or more information sources (main CPs), while the system 100 in the first embodiment efficiently distributes the information to a specific client utilizing PPF registered based on a single information source (main CP).

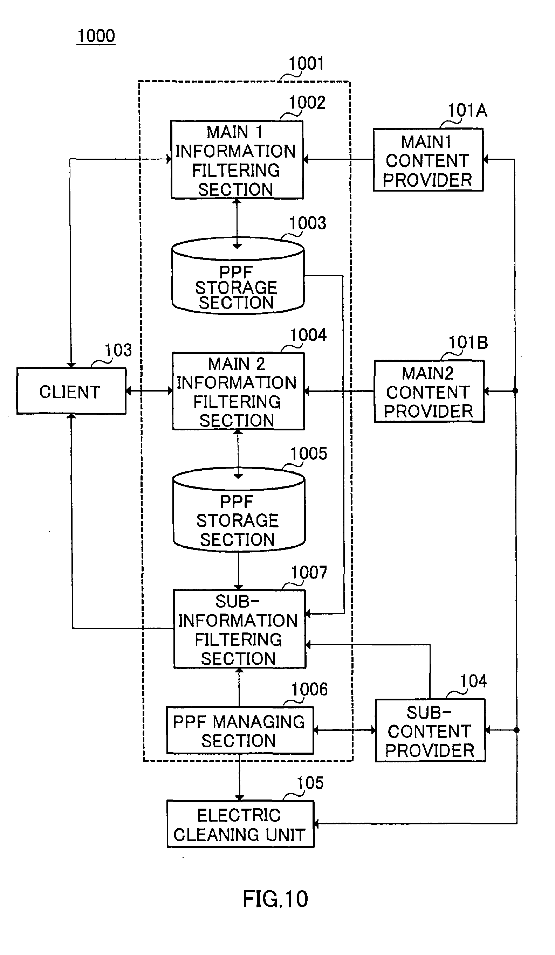

Information distribution system 1000 according to the second embodiment has two connected main CPs each distributing distribution information which is distributed to client 103 and which is used in learning PPF, and in this respect, differs from the first embodiment. FIG.10 is a block diagram illustrating information distribution system 1000 according to the second embodiment. In addition, FIG.10 illustrates the case where two main CPs are connected.

As illustrated in FIG.10, information distribution system 1000 differs from the system 100 in the first embodiment in points that information distribution unit 1001 is connected to main1 content provider (hereinafter referred to as "main1 CP") 101A and main2 content provider (hereinafter referred to as "main2 CP") 101B, and is provided with main1 information filtering section 1002 and PPF storage section 1003 associated with main1 CP 101A, and with main2 information filtering section 1004 and PPF storage section 1005 associated with main2 CP 101B. The system 1000 has the same configuration as that of the system 100 in the first embodiment except the foregoing.

Main1 CP 101A and main2 CP 101B each have the same function as that of main CP 101 in the first embodiment. It is assumed in the second embodiment that main1 CP 101A distributes the newspaper information, main2 CP 101B distributes the information (hereinafter referred to as "TV information") including information for recommending TV programs, and that sub-CP 104 distributes the advertising information.

Main1 information filtering section 1002 and main2 information filtering section 1004 each have the same function as that of main information filtering section 102 in the first embodiment. In other words, the sections 1002 and 1004 each generate PPF reflective of preferences of client 103 based on the information distributed from the respective main CP connected thereto and data input from client 103.

PPF storage section 1003 and PPF storage section 1005 each have the same function of PPF storage section 202 in the first embodiment. PPF generated based on the information distributed from the respective main CP is stored in PPF storage section 1003 or PPF storage section 1005. In this embodiment, PPF storage section 1003 stores PPF (hereinafter referred to as "newspaper information PPF") generated based on the newspaper information, and PPF storage section 1005 stores PPF (hereinafter referred to as "TV information PPF") generated based on the TV information.

PPF managing section 1006 manages as to whether or not to permit the utilization, requested from sub-CP 104, of PPF of specific client 1003 registered with PPF storage section 1003 or PPF storage section 1005. In managing the permission on the utilization of PPF, PPF managing section 1006 notifies in advance sub-CP 104 of contents of available PPF. In this embodiment, the section 1006 notifies that the newspaper information PPF and TV information PPF are available to sub-CP 104. When receiving the notification, sub-CP 104 determines PPF to utilize to instruct to PPF managing section 1006. It is herein assumed that the TV information PPF is instructed.

When PPF storage section 1006 permits the utilization of the TV information PPF, the section 1006 notifies the permission to sub-CP 104 and sub-information filtering section 1007. When receiving the notification, sub-CP 104 starts distributing the information to sub-information filtering section 1007. In this embodiment sub-CP 104 starts distributing the advertising information.

Meanwhile, sub-information filtering section 1007 fetches the TV information PPF from PPF storage section 1005, and performs the filtering processing on the advertising information from sub-CP 104 using the TV information PPF. In addition, as in the first embodiment, sub-information filtering section 1007 does not perform the learning processing based on the advertising information.

The advertising information subjected to the filtering processing based on the TV information PPF in sub-information filtering section 1007 is distributed to client 1003 as in the first embodiment. The advertising information pieces form sub-CP 104 are thus ranked according to previous inputs of client 103 indicative of interests or hates thereof on the TV information without being given any particular processing, and then displayed on the display or the like of PC that client 103 operates.

Thus, according to information distribution system 1000 of the second embodiment, sub-CP 104 is capable of efficiently distributing the advertising information by utilizing PPF reflective of preferences of specific client 103 registered based on the TV information or the like, without having prior knowledge of the client 103.

Further, since sub-CP 104 is capable of selecting PPF generated based on any of two or more information sources (main CPS), it is possible to switch PPF to utilize to suit the type of distribution information. It is thereby possible to efficiently perform the information distribution corresponding to preferences of a specific client.

In addition, while in the second embodiment selecting PPF generated based on any of two or more information sources (main CPs) causes the information distribution corresponding to preferences of a specific client to be performed more efficiently, information distribution system 1000 is not limited to the foregoing. For example, even a single information source (main CP) is applicable. In this case, the information distributed from the source is divided into two or more categories automatically corresponding to the contents to generate PPF, and sub-CP 104 selects either PPF generated corresponding to the categories. In such a case, the information distribution is performed corresponding to categorized preferences of client 103, and it is thereby possible to perform the information distribution more efficiently.

### (Third embodiment)

In information distribution system 1100 in the third embodiment, client 103 selects PPF for use in the filtering processing to rank the distribution information from some information source (main CP), and receives the distribution information which is ranked using PPF generated based on different interests, while in the second embodiment, sub-CP 104 selects PPF to use in the filtering processing on the distribution information from sub-CP 104 and thereby the information distribution is efficiently performed.

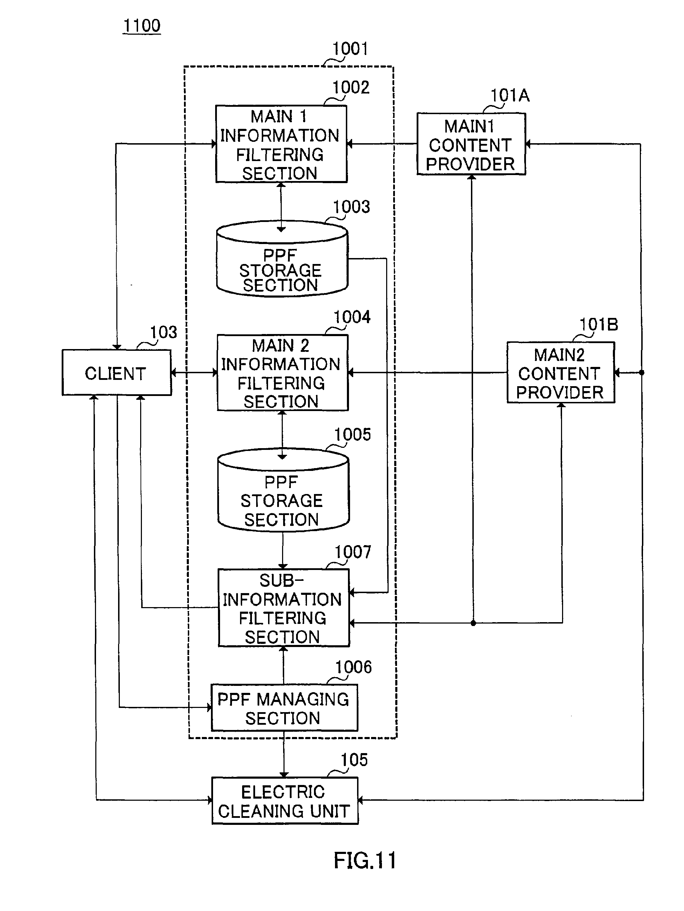

Information distribution system 1100 according to the third embodiment differs from the system 1000 in the second embodiment in points that client 103 selects the distribution information to perform the filtering processing and further selects PPF for use in the filtering processing. FIG.11 is a block diagram illustrating a configuration of information distribution system 1100 according to the third embodiment. It is assumed in information distribution system 1100 according to the third embodiment that main1 CP 101A distributes the newspaper information, and that main2 CP 101B distributes the advertising information. In information distribution system 1100 illustrated in FIG.11, client 103 selects the distribution information to perform the filtering processing and further selects PPF for use in the filtering processing. In other words, client 103 selects distribution information from either main CP to perform the filtering processing, and either PPF to use in this filtering processing. Selected distribution information and PPF is notified to PPF managing section 1006.

When PPF managing section 1006 receives the notification indicative of the selected distribution information and PPF from client 103, the section 1006 notifies the contents to sub-information filtering section 1007 and electronic clearing unit 105.

Sub-information filtering section 1007 request either main CP (101A or 101B) to distribute the selected distribution information, corresponding to the notification, while fetching the selected PPF from either storage section (1003 or 1005). Then, the section 1007 performs the filtering processing on the distribution information from either main CP (101A or 101B) based on the fetched PPF. The distribution information subjected to the filtering processing in sub-information filtering section 1007 is distributed to client 1003 in the same way as in the first embodiment. Then, the distribution information is displayed on the display or the like of PC that client 103 operates.

Corresponding to such utilization of PPF, electronic clearing unit 105 withdraws the PPF utilization charge from an account designated by client 103. In addition, it may be possible that electronic clearing unit 105 serves so that an agency that operates information distribution unit 102 receives a brokerage commission from client 103. However, in consideration of promoting the utilization of information distribution system 1100, it is preferable to make client 103 select at no charge.

A case will be described below specifically where information distribution system 1100 of the third embodiment is put to use. For example, it is assumed that the newspaper information is browsed in information distribution system 1100. In this case, the newspaper information is subjected to the filtering processing with the newspaper PPF reflective of preferences of client 103, and is ranked corresponding to preferences of client 103. It is assumed that merchandise information whose merchandise client 103 desires to purchase appears in such ranked newspaper information. It is recognized that the merchandise information is ranked in a higher place by the newspaper PPF reflective of preferences of client 103.

Accordingly, the newspaper PPF is assumed to be PPF for ranking keywords contained in the merchandise information in higher places. Therefore, it is considered that using the newspaper PPF in the filtering processing on the advertising information ranks the advertising information associated with the merchandise information in a higher place.

As describe above, there exist needs of client 103 for using PPF corresponding to the distribution information from some information source (main CP) in the filtering processing on the distribution information from a different information source (main CP). In this case, client 103 selects the advertising information to perform the filtering processing, and further selects the newspaper PPF as PPF for use in the filtering processing.

Thus, according to information distribution system 1100 of the third embodiment, client 103 is capable of selecting distribution information to perform the filtering processing and PPF for use in the filtering processing. It is thereby possible to rank the distribution information from some information source (main CP) using PPF generated based on different distribution information, whereby it is possible to provide the information distribution unit more excellent in utilization value.

As described above, according to the present invention, PPF generated based on the distribution information from an information source is used to distribute the information from a different information source, whereby it is possible to efficiently distribute the information corresponding to preferences of a specific client, without having prior knowledge of preferences of the specific client.

The present invention is not limited to the above described embodiments, and various variations and modifications may be possible without departing from the scope of the present invention.

This application is based on the Japanese Patent Application No.2000-359044 filed on November 27, 2000, entire content of which is expressly incorporated by reference herein.

## Claims

1. An information distribution system (100) comprising:
a storage section (202) that stores a personal profile with which various keywords contained in distribution information pieces provided from a distribution information provider (101) and evaluation values corresponding to the keywords are registered, the evaluation values learned in advance based on a preference of a specific client (103); and
an information filtering unit (201,204) that rates the distribution information pieces from the distribution information provider (101) based on the personal profile to distribute to the client (103),
wherein said information filtering unit (201,204) rates distribution information pieces from a different distribution information provider (104) based on the personal profile to distribute to the client (103).

2. The information distribution system (100) according to claim 1, wherein said information filtering unit (201,204) comprises a first information filtering section (201) that rates the distribution information pieces from the distribution information provider (101) based on the personal profile to distribute to the client (103), and a second information filtering section (204) that rates the distribution information pieces from the different distribution information provider (104) based on the personal profile to distribute to the client (103).

3. The information distribution system (100) according to claim 2, wherein said first information filtering section (201) performs learning processing on the personal profile based on the distribution information pieces from the distribution information provider (101), while said second information filtering section (204) does not perform the learning processing on the personal profile based on the distribution information pieces from the different distribution information provider (104).

4. The information distribution system (100) according to claim 1, further comprising:
a managing section (203) that manages utilization of the personal profile for the distribution information pieces from the different distribution information provider (104),
wherein when said managing section (203) permits the utilization of the personal profile, the distribution information pieces from the different distribution information provider (204) are input to said information filtering unit (201,204).

5. The information distribution system (100) according to claim 1, further comprising:
a clearing unit (105) that withdraws a charge for utilizing the personal profile from an account designated by the different distribution information provider (104) when said information filtering unit (201,204) rates the distribution information pieces from the different distribution information provider (104) based on the personal profile to distribute to the client (103).

6. An information distribution system (100) comprising:
a distribution information provider (101) that provides distribution information to be distributed to a client (103);
a storage section (202) that stores a personal profile with which various keywords contained in distribution information pieces provided from the distribution information provider (101) and evaluation values corresponding to the keywords are registered, the evaluation values learned in advance based on a preference of the client (103); and
an information filtering unit (201,204) that rates the distribution information pieces from the distribution information provider (101) based on the personal profile to distribute to the client (103),
wherein said information filtering unit (201,204) rates distribution information pieces from a different distribution information provider (104) based on the personal profile to distribute to the client (103).

7. The information distribution system (100) according to claim 6, wherein said information filtering unit (201,204) comprises a first information filtering section (202) that rates the distribution information pieces from the distribution information provider (101) based on the personal profile to distribute to the client (103), and a second information filtering section (204) that rates the distribution information pieces from the different distribution information provider (104) based on the personal profile to distribute to the client (103).

8. The information distribution system (100) according to claim 7, wherein said first information filtering section (201) performs learning processing on the personal profile based on the distribution information pieces from the distribution information provider (101), while said second information filtering section (204) does not perform the learning processing on the personal profile based on the distribution information pieces from the different distribution information provider (104).

9. The information distribution system (100) according to claim 6, further comprising:
a managing section (203) that manages utilization of the personal profile for the distribution information pieces from the different distribution information provider (104),
wherein when said managing section (203) permits the utilization of the personal profile, the distribution information pieces from the different distribution provider (104) are input to said information filtering unit (201,204).

10. The information distribution system (100) according to claim 6, further comprising:
a clearing unit (105) that withdraws a charge for utilizing the personal profile from an account designated by the different distribution information provider (104) when said information filtering unit (201,204) rates the distribution information pieces from the different distribution information provider (104) based on the personal profile to distribute to the client (103).

11. An information distribution system comprising:
a storage section that stores a personal profile with which various keywords contained in first distribution information pieces provided from a distribution information provider and evaluation values corresponding to the keywords are registered, the evaluation values learned in advance based on a preference of a client; and
an information filtering unit that rates the first distribution information pieces based on the personal profile to distribute to the client,
wherein said information filtering unit rates second distribution information pieces from the distribution information provider based on the personal profile to distribute to the client.

12. The information distribution system according to claim 11, wherein said information filtering unit comprises a first information filtering section that rates the first distribution information pieces based on the personal profile to distribute to the client, and a second information filtering section that rates the second distribution information pieces based on the personal profile to distribute to the client.

13. The information distribution system according to claim 12, wherein said first information filtering section performs learning processing on the personal profile based on the first distribution information pieces, while said second information filtering section does not perform the learning processing on the personal profile based on the second distribution information pieces.

14. An information distribution system (1000) comprising:
a storage section (1003,1005) that stores personal profiles for each of a plurality of distribution information providers (101A,101B), each personal profile having registered therewith various keywords contained in distribution information pieces provided from one of said distribution information providers and evaluation values corresponding to the keywords, the evaluation values learned in advance based on a preference of a specific client (103); and
an information filtering unit (1002,1004) that rates the distribution information pieces from either one of the distribution information providers (101A,101B) based on the personal profile corresponding to the distribution information provider to distribute to the client (103),
wherein said information filtering unit (1002,1004) rates distribution information pieces from a distribution information provider (104) other than the plurality of the distribution information providers (101A,101B) based on either one of the personal profiles stored in said storage section (1003,1005) to distribute to the client (103).

15. The information distribution system (1000) according to claim 14, wherein said information filtering unit (1002,1004) selects the either one of the personal profiles stored in said storage section (1003,1005), in response to a request from the distribution information provider (104) other than the plurality of the distribution information providers (101A,101B).

16. An information distribution system (1100) comprising:
a storage section (1003,1005) that stores personal profiles for each of a plurality of distribution information providers (101A,101B), each personal profile having registered therewith various keywords contained in distribution information pieces provided from one of the distribution information providers (101A,101B) and evaluation values corresponding to the keywords, the evaluation values learned in advance based on a preference of a specific client (103); and
an information filtering unit (1002,1004) that rates the distribution information pieces from either one of the distribution information providers (101A,101B) based on the personal profile corresponding to the distribution information provider (101A,101B) to distribute to the client (103),
wherein said information filtering unit (1002,1004) rates the distribution information pieces from either one of the plurality of the distribution information providers (101A,101B) based on either one of the personal profiles stored in said storage section (1003,1005) to distribute to the client (103).

17. The information distribution system (1100) according to claim 16, wherein said information filtering unit (1002,1004) selects the either one of the personal profiles stored in said storage section (1003,1005), in response to a request from the client (103).

18. An information distribution apparatus comprising:
a storage section (202) that stores a personal profile with which various keywords contained in distribution information pieces provided from a distribution information provider (101A) and evaluation values corresponding to the keywords are registered, the evaluation values learned in advance based on a preference of a client (103);
a first information filtering section (201) that learns the personal profile based on the distribution information pieces from the distribution information provider (101A), while rating the distribution information pieces from the distribution information provider (101A) based on the personal profile to distribute to the client (103); and
a second information filtering section (204) that rates distribution information pieces from another distribution information provider (104) different from the distribution information provider (101) based on the personal profile to distribute to the client (103).

19. An information distribution method comprising the steps of:
generating a personal profile having registered therewith various keywords contained in distribution information pieces provided from a distribution information provider (101A) and evaluation values corresponding to the keywords, the evaluation values learned in advance based on a preference of a client (103); and
rating the distribution information pieces from the distribution information provider (101A) based on the personal profile to distribute to the client (103),
wherein distribution information pieces from another distribution information provider (104) different from the distribution information provider (101) are rated based on the personal profile to distribute to the client (103).
